# EUROPEAN PATENT SPECIFICATION

(11) **EP 1 581 901 B1**
(45) Date of publication and mention of the grant of the patent: **24.10.2018**
(21) Application number: 04700165.6
(22) Date of filing: 05.01.2004
(51) Int. Cl.: G06Q 30/02, G06K 7/00, G06K 17/00

(54) **SYSTEM AND METHOD FOR TARGETED MESSAGING**
SYSTEM UND VERFAHREN ZUR GEZIELTEN NACHRICHTENÜBERMITTLUNG
SYSTEME ET PROCEDE DE MESSAGERIE CIBLEE

(30) Priority: 10.01.2003 US 439033 P
(43) Date of publication of application: 05.10.2005
(73) Proprietor: Eldat Communications Ltd., Tel Aviv 67778 (IL)
(72) Inventor: SMOLER, Yosef, 75209 Rishon Lezion (IL)
(74) Representative: Brann AB
(86) International application number: PCT/IL2004/000004
(87) International publication number: WO 2004/064258

(56) References cited:
- US-A- 5 889 449
- US-A- 6 047 263
- US-A- 6 107 936
- US-B1- 6 177 880
- US-B1- 6 314 406
- US-B1- 6 327 570

## Description

### FIELD OF THE INVENTION

The invention relates to transmitting information to a visitor to a site displaying a large number of items generally and, more particularly, to transmitting targeted information for attracting the visitor's attention to specific items.

### BACKGROUND OF THE INVENTION

There are several known problems related to communicating with a visitor to a site displaying a large number of items, such as a supermarket or a shopping center.

One problem of such advertising situations relates to the ability to inform the visitor of the location of specific items that may interest the visitor, for example, products the visitor may like to purchase at a supermarket. At present, overhead signs or displays are used in order to provide the visitor with information regarding the items, for example, indications of the locations of items. Such information or indications are often out of date and are usually only general in nature. Another known method used in shopping centers makes use of placards or posters bearing lists of items with designated locations. Such posters or placards may be mounted on various objects, e.g., on shopping carts used by shoppers to carry selected items for purchase. However, these item lists are usually incomplete, the designated locations usually lack specificity and the posters are often obscured or covered by items that have been placed in the shopping cart.

Another problem of advertising to visitors or customers relates to providing a visitor with information and/or advertising regarding an item at the location of an item for example, advertising a product in a supermarket at a location where a product may be selected. Unfortunately, shelf space is usually limited in a marketing area and the use of placards or posters at points of display for the items offered, although used extensively, may be unsatisfactory. Furthermore, the posters may obscure the view of the products on display, may take up valuable space and are frequently very small and, thus, ineffective.

Due to lack of shelf and floor space for advertising many product purveyors use special displays at specific store locations. For example, television monitors and viewing screens for movie or slide projectors may be strategically located in marketing areas to display product identities or to explain the use of products. Such displays are usually set up in a designated marketing area, are usually limited to one product, and frequently take a long time to present the product, thereby precipitating customer disinterest. The usually high cost of these displays is a further disadvantage.

U.S. Patents 4,882,724 to Vela, 4,973,952 to Malec, 5,572,653 to DeTemple, 5,630,068 to Vela and 5,995,015 to De Temple describe various customized-advertising solutions whereby the visitor is equipped with a portable unit carried by hand or attached to a shopping cart, and receives customized messages relating to a current position of the visitor within a store. These solutions require an inherent division of attention of the visitor between observing the screen on the portable unit and watching the items being selected.

It is also known to place electronic labels next to items to display information corresponding to the items. Such electronic labels, which may be attached to a shelf in a store and placed near merchandise items, may be used to display price and/or other information. The electronic labels may receive updated data relating to corresponding item or items, which data may be communicated individually to each electronic label from a main computer, e.g., via a wireless communication channel, for example, a RF or infrared link. Systems using such electronic labels are described in U.S. Patents 5,880,449 to Teicher, 5,933,813 to Teicher and 6,105,004 to Haperin. US Patent 6,177,880 to Begum discloses the display of information about products in the vicinity of a portable device.

### SUMMARY OF EMBODIMENTS OF THE INVENTION

According to an embodiment of the present invention, a shopper walking about a store may be free to browse the shelves and particularly the electronic labels that catch his or her attention and then look to the portable unit for more information on any items for which he or she may desire further details or other information.

More specifically, embodiments of an aspect of the present invention provide a system for displaying targeted information messages to a visitor at a site displaying a plurality of items, for example, a retail-store or a shopping center. According to these embodiments, the system may be used to attract the visitor's attention to specific items, which may be selected according to pre-defined preferences.

According to some embodiments of the invention, a system for targeted messaging may include a plurality of electronic labels associated with a plurality of items, and a portable unit associated with a visitor, wherein the portable unit is adapted to display advertising information related to at least a selected item of the plurality of items, and wherein a selected one of the plurality of electronic labels associated with the selected item is adapted to produce attention-catching indicia when the visitor is in proximity to the selected item. Simultaneously with activation of the attention-catching indicia associated with the electronic shelf label, the portable unit may display an advertisement or other information about the same selected item.

According to some embodiments of the invention the portable unit may include a data interface to store visitor preferences related to the visitor associated with the portable unit. The selected electronic label may also display a targeted offer related to the visitor preferences.

According to some exemplary embodiments the system may include at least one tracking transponder to communicate with the portable unit when the portable unit is in a vicinity of the transponder.

According to some exemplary embodiments the system may also include a central controller to control transmission of the advertising information to the portable unit, and control activation of the selected electronic label. The central controller may be able to evaluate a location of the portable unit and control operation of the transponder.

According to exemplary embodiments, the controller may include a tracking control to evaluate the location of the portable unit based on a unit ID transmitted by the portable unit and a transponder ID transmitted by the transponder. The controller may also include an advertising module to store the advertising information, a portable unit control to control transmission of the advertising information to the portable unit, and a label control to control activation of the labels to produce the attention-catching indicia.

According to other exemplary embodiments, the system may include a central controller adapted to transmit the advertising information to the transponder. The transponder may be adapted to transmit to the portable unit the advertising information and a selected item ID associated with the selected electronic label, and the portable unit may be able to activate the selected electronic label according to the selected item ID to produce attention-catching indicia.

According to exemplary embodiments, the controller may include an advertising module to store the advertising information, and a label control to control activation of the electronic labels.

According to embodiments of the invention, a method of transmitting targeted information to a visitor may include activating an electronic label associated with an item to produce attention-catching indicia when the visitor is in proximity to the item, and displaying advertising information related to the item on a display of a portable unit associated with the visitor.

According to exemplary embodiments of the invention, the method may include evaluating a current location of the portable unit, selecting an item in the vicinity of the location of the portable unit, and producing attention-catching indicia by a selected electronic label associated with the selected item when the visitor is in proximity to the item. Evaluating the current location of the portable unit may include seeking a transponder in a vicinity of the portable unit. The method may also include comparing an ID of the transponder with an ID of the portable unit.

According to exemplary embodiments, the method may also include halting for a period of time after displaying the advertising information.

According to some exemplary embodiments, producing attention-catching indicia may include transmitting an activation signal from a central controller to the selected electronic label. Displaying the advertising information may include transmitting the advertising information from the central controller to the portable unit.

According to other exemplary embodiments, displaying the advertising information may include transmitting the advertising information from a tracking transponder in a vicinity of the portable unit to the portable unit. Producing the attention-catching indicia may include transmitting a selected ID associated with the selected item from a tracking transponder in a vicinity of the portable unit to the portable unit, and activating the selected electronic label, wherein the selected electronic label is related to the selected ID. Activating the selected electronic label may include transmitting the selected ID from the portable unit to the selected electronic label.

### BRIEF DESCRIPTION OF THE DRAWINGS

FIG. 1 is a schematic block diagram illustrating a system for targeted messaging in accordance with exemplary embodiments of the invention;
FIG. 2 is a schematic illustration of a method of using the system of FIG. 1 according to exemplary embodiments of the invention;
FIG. 3 is a schematic block diagram illustrating another system for targeted messaging in accordance with exemplary embodiments of the invention; and
FIG. 4 is a schematic illustration of a method of using the system of FIG. 3 according to exemplary embodiments of the invention.

### DETAILED DESCRIPTION OF EMBODIMENTS OF THE INVENTION

In the following description, various aspects of the present invention will be described. For purposes of explanation, specific configurations and details are set forth in order to provide a thorough understanding of the present invention. However, it will be apparent to one skilled in the art that the present invention may be practiced without the specific details presented herein. Furthermore, some features of the invention relying on principles and implementations known in the art may be omitted or simplified to avoid obscuring the present invention.

Embodiments of the present invention provide a system for displaying targeted information messages to a visitor at a site displaying a plurality of items, for example, a retail-store or a shopping center. According to these embodiments, the system may be used to attract the visitor's attention to specific items selected according to pre-defined preferences.

According to some embodiments of the invention, the system may include a portable unit associated with the visitor, and a plurality of electronic labels associated with a plurality of items. When the visitor is in proximity to a selected item the portable unit may display advertising information related to the selected item, and an electronic label associated with the selected item may produce attention-catching indicia, as described below.

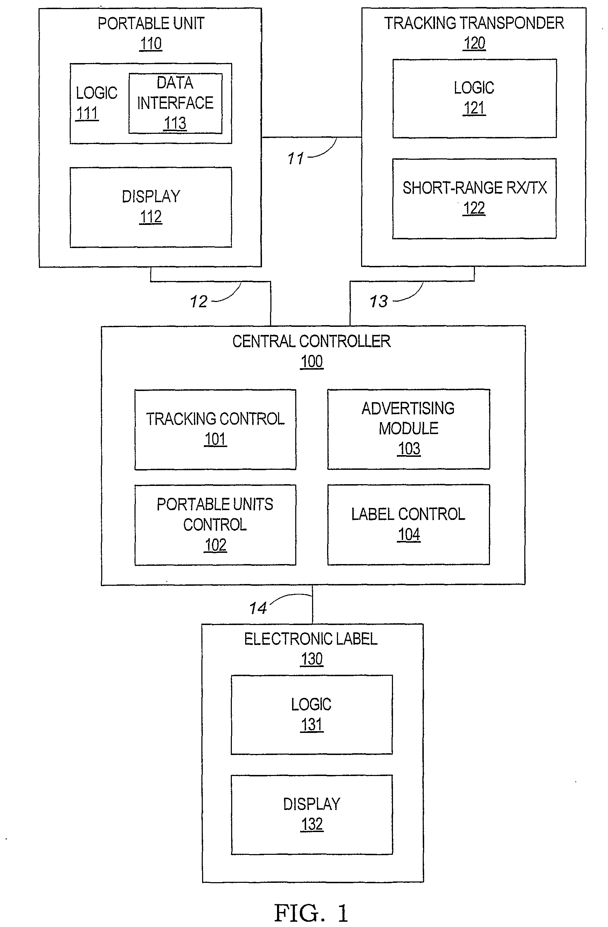

Reference is made to FIG. 1, which is a schematic block diagram illustrating a system for targeted messaging, for example, in a retail-store context, in accordance with exemplary embodiments of the invention.

The system of Fig. 1 may include at least one portable unit 110, which may be associated with at least one tracking transponder 120 via a communication link 11. The system may further include a central controller 100, for example, a computer, which may be associated with portable unit 110 and tracking transponder 120 via communication links 12 and 13, respectively. Additionally, the system may include at least one electronic label 130, which may be associated with central controller 100 via a communication link 14. Communication links 11, 12, 13 and 14 may include wireless communication links, for example, a Radio Frequency (RF) or infrared (IR) links, or any other type of communication link suitable for wireless communication between at least some of the different units of the system. Communication link 11 may include a short range communication link adapted to provide communication between portable unit 110 and at least one tracking transponder 120, e.g., when unit 110 is in a predetermined distance and/or angle of view in relation to transponder 120, as is known in the art. Communication link 13 and/or link 14 may alternatively include any other type of communication link, e.g., a wired link.

Portable unit 110 may be carried by a visitor to a retail-store, may be attached to a shopping cart used by the visitor, or may otherwise accompany the visitor to allow convenient use of the system of the invention.

According to an exemplary embodiment of the invention, portable unit 110 may include a logic unit 111 and a display unit 112 adapted to display advertising information received from central controller 100. Logic unit 111 may include a processor and/or other circuitry (not shown) to allow operation of portable unit 110 as described in detail below.

According to an exemplary embodiment of the invention, logic unit 111 may optionally include a data interface 113 to allow entering information regarding the visitor, e.g., upon check-in to the retail-store. Such information may include identification (ID) information of the visitor to allow identifying the visitor in the retail-store throughout the shopping session and to allow the system to customize advertising information addressed to the visitor, e.g., according to a personal profile stored by central controller 100.

According to exemplary embodiments of the invention, wireless communication link 12 may allow portable unit 110 to exchange data with central controller 100, for example, information regarding a location of the portable unit and/or advertising information regarding selected items located at a pre-defined distance from the visitor as explained below.

Tracking transponder 120 may be one of many units scattered at various, pre-defined, locations of the retail-store. Tracking transponder 120 may communicate with portable unit 110, e.g., via wireless communication link 11 to allow evaluating a current location of the portable unit in the retail-store, as described in detail below.

Tracking transponder 120 may include, for example, a short-range receiver-transmitter 122 associated with a logic unit 121. Short range receiver-transmitter 122 may be adapted, for example, to allow communication between transponder 120 and unit 110, e.g., via communication link 11, only when unit 110 is positioned in a predetermined distance and/or angle of view in raltion to transponder 120. When short-range receiver-transmitter 122 is triggered by a signal from portable unit 110, e.g., via communication link 11, it may identify the proximity of portable unit 110 to tracking transponder 120. An evaluation of the current location of the visitor carrying the portable unit 110 may be achieved by matching an identity of portable unit 110, which may be stored at logic unit 111, with an identity of tracking transponder 120, which may be stored at logic unit 121. The evaluated location of the visitor may then be transmitted from tracking transponder 120 to central controller 100 via communication link 13. Alternatively or additionally, the evaluated location may be transmitted from portable unit 110 to central controller 100 via communication link 12.

According to exemplary embodiments of the invention, electronic label 130 may be associated with an item displayed in the retail-store for sale (not shown). Electronic label 130 may be attached to specific individual items such as a desk in a furniture store, or may be attached to a supermarket shelf next to a plurality of identical items. Electronic label 130 may include a display unit 132 and a logic unit 131. Logic unit 131 may receive, e.g., from the central controller, item-specific information, for example, product price, identifying at least one corresponding item, and may be adapted to control pre-defined functions associated with display unit 132 as well as the communication with central computer 100 via communication link 14. Communication link 14 may be used to transfer the item-specific information from the central controller to logic 131. Display 132 may include a visual display to allow displaying the item-specific information and may further comprise attention-catching elements (not shown) such as a switchable blinking light emitting diode (LED) and/or a sound-producing device, for example, a speaker (not shown).

Central controller 100 may include a tracking control unit 101 able to interface with tracking transponders 120 so as to provide central controller 100 with an evaluated location of portable unit 110, a portable unit control 102 able to interface with portable units 110 as described below, an advertising module 103 able to co-ordinate the operation of units 110, 120 and 130, as described below, and a label control unit 104 able to control operation of electronic label 130 as described below.

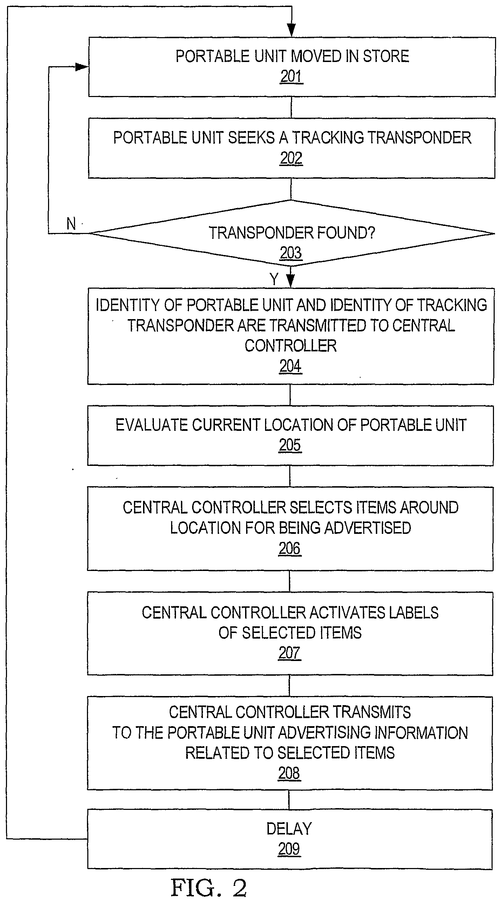

Reference is made to FIG. 2, which schematically illustrates a method of using a system such as that depicted in FIG. 1 according to exemplary embodiments of the invention.

The method of Fig. 2 may begin with a visitor moving with portable unit 110 around the retail-store, as indicated at block 201.

As indicated at block 202, the portable unit 110 may send wireless signals via communication link 11 to seek tracking transponder units 120 in its proximity.

As indicated at block 203, portable unit 110 may check for a response from one of tracking transponder units 120. If a response is not received the portable unit may continue to be moved around the store, as indicated at block 201.

When the portable unit receives a response, the identity of portable unit 110 and the identity of tracking transponder 120 in communication with portable unit 110, which may be retrieved from logic unit 111 and from logic unit 121, respectively, may be transmitted to central controller 100 via communication links 12 and/or 13, as indicated at block 204.

Central controller 100 may activate tracking control unit 101 to evaluate the substantially current location of the visitor from a correlation between the identity signals of the portable unit 110 and tracking transponder 120 in communication with portable unit 110 as indicated at block 205.

The central controller may activate advertising module 103 to select items located around the visitor's current location, e.g., in a pre-defined distance from the evaluated location of the portable unit, as indicated at block 206. The items selected may be associated, for example, with special discount offers or any other advertising material stored in an advertising database (not shown), which may be included in advertising module 103.

In some embodiments of the invention, the items selected by advertising module 103 may relate to specific preferences of the visitor as identified by the visitor identification information that may be stored in data interface 113, which may include a visitor profile database (not shown) stored in advertising module 103.

As indicated at block 207, after selected items have been identified and associated advertising material has been prepared by advertising module 103, central controller 100 may activate label control unit 104 to send an activation signal via communication link 14 activating electronic labels 130 corresponding to the selected items. The activation of the electronic labels may include, for example, an attention catching indication, which may include an audio and/or visual indication of the item-specific information on the displays 132 of the electronic labels, and/or activation of the display attention-catching elements.

As indicated at block 208, portable units control 102 may use communication link 12 to transmit the advertising information related to the selected items to portable unit 110. The advertising information may be displayed on display 112 allowing the visitor to browse, by use of a user interface (not shown), through items of interest that may have been identified to the user by the activated electronic labels. The user interface may include, for example, a keypad (not shown) located on the portable unit, or a touch-screen incorporated as part of display 112.

The system may halt for a pre-defined period of time, e.g. 5 seconds, to allow the visitor sufficient time to read the advertising information which may be of interest, as indicated at block 209.

The system may resume operation at block 201 as the visitor moves within the store.

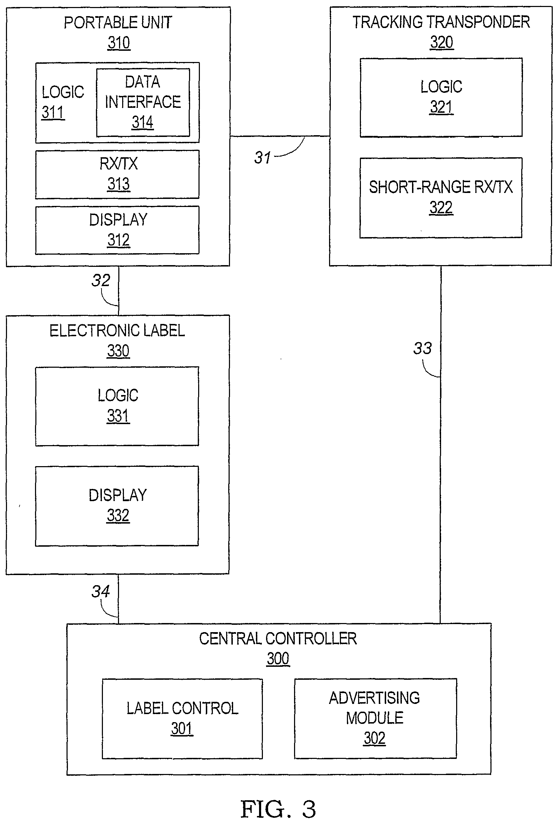

Reference is now made to FIG. 3 which is a schematic block diagram illustrating an alternative system for targeted messaging, for example, in a retail-store context, in accordance with exemplary embodiments of the invention.

A system for targeted messaging may include, according to alternative exemplary embodiments of the invention, a central controller 300, at least one portable unit 310 and at least one tracking transponder 320 associated with central controller 300 and portable unit 310 via communication links 33 and 31, respectively. The system may additionally include at least one electronic label 330 associated with central controller 300 and portable unit 310 via communication links 34 and 32, respectively. Communication links 31, 32, 33 and 34 may include wireless communication links, for example, a Radio Frequency (RF) or infrared (IR) links, or any other type of communication link suitable for wireless communication between the different units of the system. Communication link 31 may include a short range communication link adapted to provide communication between portable unit 310 and at least one tracking transponder 320, e.g., when unit 310 is in a predetermined distance and/or angle of view in relation to transponder 320, as is known in the art.. Communication link 33 and/or link 34 may alternatively include any other type of communication link, e.g., a wired link.

According to exemplary embodiments of the invention, tracking transponder 320 may include a logic unit 321 and a short-range transceiver 322.

According to exemplary embodiments of the invention, portable unit 310 may include a logic unit 311, a display 312 and a transceiver 313 able to allow communication between portable unit 310 and short-range transceiver 322 via communication link 31. Transceiver 322 and/or transceiver 313 may be adapted, for example, to allow communication between transponder 320 and unit 310, e.g., via communication link 31, only when unit 310 is positioned in a predetermined distance and/or angle of view in raltion to transponder 320.

According to an exemplary embodiment of the invention, logic unit 311 may optionally include a data interface 314 to allow entering information regarding the visitor, e.g., upon check-in to the retail-store. Such information may include identification (ID) information of the visitor to allow identifying the visitor in the retail-store throughout the shopping session and to allow the system to customize advertising information addressed to the visitor, e.g., according to a personal profile stored on central controller 300.

According to exemplary embodiments of the invention, electronic label 320 may include a logic unit 331 and a display 332.

According to exemplary embodiments of the invention, central controller 300 may include a label control unit 301 and an advertising module 302 which may include a database of item-specific information (not shown). Such item-specific information may include, for example, a current price of the item or a special discount.

According to these exemplary embodiments of the invention, tracking transponder units 320 may be positioned at pre-defined locations around the store and may include advertising information stored in logic 321. The advertising information may include advertising information related to selected items in the vicinity of each tracking transponder 320. The advertising information may be received from advertising module 302, e.g., via communication link 33.

According to exemplary embodiments of the invention, electronic label 330 may be associated with an item displayed in the retail-store for sale (not shown). Electronic label 330 may be attached to specific individual items such as a desk in a furniture store, or may be attached to a supermarket shelf next to a plurality of identical items. Electronic label 330 may be identified by an ID, which may be stored in logic 331. Electronic label 330 may use communication link 34 to receive the item-specific information related to a corresponding item from label controller 301. The item-specific information may be stored in logic 331 and/or displayed on display 332. Display 332 may include a visual display to allow displaying the item-specific information and may further include attention-catching elements (not shown) such as a switchable blinking light emitting diode (LED) and/or a sound-producing device, for example, a speaker (not shown).

Portable unit 310 may use communication link 31 to receive the advertising information stored on logic 321 of the tracking transponder. The received advertising information may be stored on logic 311 and/or displayed on display 312.

Communication link 32 may allow communication between portable unit transceiver 313 and electronic label logic 331. Communication link 32 may be used to transfer the IDs of the electronic labels corresponding to the selected items stored in logic 311 to electronic labels 330. Each electronic label 330 may compare the IDs received from portable unit 310 to its own ID stored in logic 331. If the ID received from the portable unit matches the ID stored in logic 331, logic 331 may activate the attention catching elements of display 332 and/or display the item-specific information.

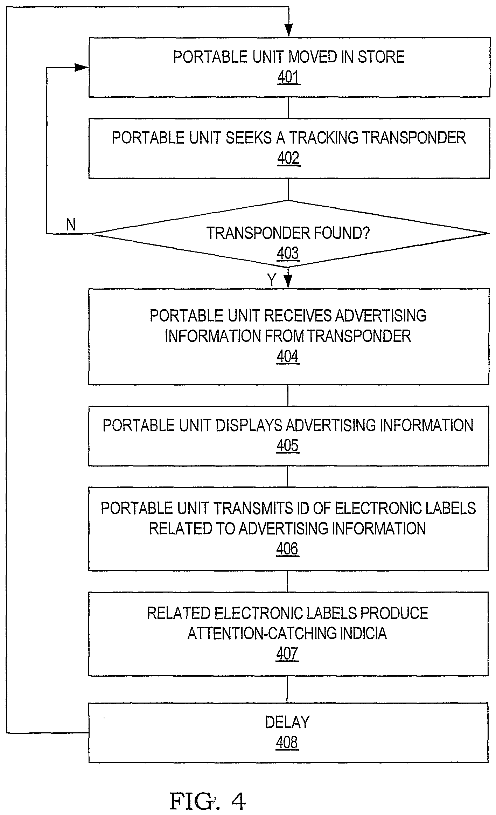

Reference is made to FIG. 4, which is a schematic illustration of a method of using the system of FIG. 3 according to exemplary embodiments of the invention.

The method of Fig. 4 may begin with a visitor moving with portable unit 310 around the retail-store, as indicated at block 401.

As indicated at block 402, portable unit 310 may send wireless signals, e.g., via short-range communication link 31 to seek tracking transponder units 320 in its proximity.

As indicated at block 403, portable unit 310 may check for a response from one of tracking transponder units 320. If a response is not received the portable unit may continue to be moved around the store, as indicated at block 401.

When the portable unit receives a response, transponder 320 may transmit advertising information to portable unit 310 via communication link 31, as indicated at block 404. The advertising information may include advertising information related to selected items in the vicinity of transponder 320 as well as IDs of electronic labels 330 corresponding to the selected items.

As indicated at block 405, portable unit 310 may display the advertising information received from transponder 320 on display 312.

Substantially concurrently, portable unit 310 may use communication link 32 to transfer the IDs received from transponder 320 to electronic labels 330, as indicated at block 406.

As indicated at block 407, each electronic label 330 compares the IDs received from portable unit 310 with the electronic label ID stored in logic 331. The electronic labels having an electronic label ID matching any of the received IDs may respond by activating the attention catching elements of display 312 and/or display the item-specific information stored in logic 331. The visitor may now browse e.g., using a user interface (not shown), through the advertising information displayed by display 312 corresponding to the items of interest that he may have already identified by one or more activated electronic labels 330. The user interface may include, for example, a keypad located on portable unit 310 (not shown) or as a touch-screen incorporated as part of display 312. If none of the electronic labels 330 identify an item of interest to the visitor, he may skip watching display 312 of the portable unit.

The system may halt for a pre-defined period of time, e.g. 5 seconds, to allow the visitor sufficient time to read the advertising information which may be of interest, as indicated at block 408.

The system may resume operation at block 401 as the visitor moves within the store.

It will be appreciated by those skilled in the art, that the system and/or method in accordance with embodiments of the invention, may be implemented to allow targeted advertising focused on items of interest to the visitor, e.g., by allowing the costumer to look at the advertisment displayed by the portable unit only if he is interested in the item corresponding to the electronic label. Furthermore, implementing the method and/or system according to embodimetns of the invention may allow controllably activating the electronic labels such that, for example, only labels in the vicinity of the visitor are activated. Thus, a suitable number of transponders may be implemented such that, for example, only one electronic label may be activated in the vicinity of the visitor, and an advertisment corresponding to the activated label may be displayed by the portable unit.

In other embodiments of the invention, the systems and methods described, may be implemented in a other contexts to allow a shopper to receive targeted information related to displayed items as he passes in their vicinity and/or to receive information regarding the location of selected items.

In additional embodiments of the invention, the systems and methods described may be implemented for displaying targeted information messages to a visitor at a site displaying a plurality of items.

While the invention has been described with respect to a limited number of embodiments, it will be appreciated that many variations, modifications and other applications of the invention may be made.

## Claims

1. A system for targeted messaging comprising:
a plurality of electronic labels (130;330) associated with a plurality of items; and
a portable unit (110;310) associated with a visitor adapted to display advertising information related to at least a selected item of said plurality of items, wherein a selected one of said plurality of electronic labels (130;330) associated with said selected item is adapted to produce attention-catching indicia when said visitor is in proximity to said selected item.

2. The system according to claim 1 further comprising at least one tracking transponder (120;320) to communicate with said portable unit (110;310) when said portable unit is in a vicinity of said transponder.

3. The system of claim 2 further comprising a central controller (100;300) to control transmission of said advertising information to said portable unit (110;310), and control activation of said selected electronic label (130;330) to produce said attention-catching indicia.

4. The system of claim 2 wherein said central controller (100;300) is adapted to evaluate a location of said portable unit (110;310) and control operation of said transponder (120;320).

5. The system according to claim 4, wherein said controller (100) comprises a tracking control (101) to evaluate the location of said portable unit (110) based on a unit ID transmitted by said portable unit and a transponder ID transmitted by said transponder (120).

6. The system according to claim 5, wherein said controller (100;300) further comprises:
an advertising module (103;302) to store said advertising information;
a portable unit control (102) to control transmission of said advertising information to said portable unit (110;310); and
a label control (104;301) to control activation of said electronic labels (130;330).

7. The system of claim 2 further comprising a central controller (100;300) adapted to transmit said advertising information to said transponder (120;320).

8. The system of claim 7, wherein said transponder (120;320) is adapted to transmit to said portable unit (110;310) said advertising information and a selected item ID associated with said selected electronic label (130;330), and wherein said portable unit (110;310) is adapted to activate said selected electronic label according to said selected item ID to produce said attention-catching indicia.

9. The system according to claim 8, wherein said controller (100;300) comprises an advertising module (103;302) to store said advertising information and said item-specific information.

10. The system according to claim 1, wherein said portable unit (110;310) comprises a data interface (113;314) to store visitor preferences related to a visitor associated with said portable unit.

11. The system of claim 10 wherein said selected electronic label (130;330) is adapted to display a targeted offer related to said visitor preferences.

12. A method of transmitting targeted information to a visitor comprising:
activating an electronic label (130;330) associated with an item to produce attention-catching indicia when said visitor is in proximity to said item; and
displaying advertising information related to said item on a display (112;312) of a portable unit (110;310) associated with said visitor.

13. The method of claim 12 comprising:
evaluating a current location of said portable unit; and
selecting an item in the vicinity of said location of said portable unit, wherein the activated electronic label is associated with said selected item.

14. The method of claim 13 wherein said evaluating comprises seeking a transponder in a vicinity of said portable unit.

15. The method of claim 14 wherein said evaluating further comprises comparing an ID of said transponder with an ID of said portable unit.

16. The method of claim 13 wherein said activating comprises transmitting an activation signal from a central controller to said electronic label.

17. The method of claim 13 wherein displaying advertising information comprises transmitting said advertising information from a central controller to said portable unit.

18. The method of claim 13 wherein displaying advertising information comprises transmitting said advertising information from a tracking transponder in a vicinity of said portable unit to said portable unit.

19. The method of claim 12 wherein said activating comprises:
transmitting a selected ID associated with said electronic label from a tracking transponder in a vicinity of said portable unit to said portable unit.

20. The method of claim 19, wherein said activating further comprises transmitting said selected ID from said portable unit to said electronic label.

21. The method of claim 12 further comprising halting for a period of time after said displaying advertising information.

## Patentansprüche

1. System für gezielte Nachrichtenübermittlung, umfassend:
eine Vielzahl von elektronischen Etiketten (130; 330), die einer Vielzahl von Gegenständen zugeordnet ist; und
eine tragbare Einheit (110; 310), die einem Besucher zugeordnet ist, die angepasst ist, um Werbeinformationen anzuzeigen, die sich auf mindestens ein ausgewähltes Element der Vielzahl von Elementen beziehen, wobei eine ausgewählte eine der Vielzahl von elektronischen Etiketten (130; 330), die dem ausgewählten Gegenstand zugeordnet ist, angepasst ist, um Aufmerksamkeit erregende Zeichen zu erzeugen, wenn sich der Besucher in der Nähe des ausgewählten Gegenstands befindet.

2. System nach Anspruch 1, ferner umfassend mindestens einen Verfolgungstransponder (120; 320) zur Kommunikation mit der tragbaren Einheit (110; 310), wenn sich die tragbare Einheit in einer Nähe des Transponders befindet.

3. System nach Anspruch 2, umfassend eine zentrale Steuerung (100; 300) zur Steuerung der Übertragung der Werbeinformationen an die tragbare Einheit (110; 310) und zur Steuerung der Aktivierung des ausgewählten elektronischen Etiketts (130; 330) zur Erzeugung der Aufmerksamkeit erregenden Zeichen.

4. System nach Anspruch 2, wobei die zentrale Steuereinheit (100; 300) angepasst ist, um eine Position der tragbaren Einheit (110; 310) auszuwerten und den Betrieb des Transponders (120; 320) zu steuern.

5. System nach Anspruch 4, wobei die Steuerung (100) eine Verfolgungssteuerung (101) umfasst, um den Standort der tragbaren Einheit (110) basierend auf einer von der tragbaren Einheit übertragenen Einheiten-ID und einer von dem Transponder (120) übertragenen Transponder-ID auszuwerten.

6. System nach Anspruch 5, wobei die Steuerung (100; 300) weiterhin Folgendes umfasst:
ein Werbemodul (103; 302) zum Speichern der Werbeinformationen;
eine tragbare Einheitssteuerung (102) zum Steuern der Übertragung der Werbeinformationen an die tragbare Einheit (110; 310); und
eine Etikettensteuerung (104; 301) zum Steuern der Aktivierung der elektronischen Etiketten (130; 330).

7. System nach Anspruch 2, weiterhin umfassend eine zentrale Steuerung (100; 300), die geeignet ist, die Werbeinformationen an den Transponder (120; 320) zu übertragen.

8. System nach Anspruch 7, wobei der Transponder (120; 320) angepasst ist, um an die tragbare Einheit (110; 310) die Werbeinformationen und eine dem ausgewählten elektronischen Etikett (130; 330) zugeordnete ausgewählte Gegenstand-ID zu übertragen, und wobei die tragbare Einheit (110; 310) angepasst ist, um das ausgewählte elektronische Etikett gemäß der ausgewählten Gegenstand-ID zu aktivieren, um die Aufmerksamkeit erregenden Zeichen zu erzeugen.

9. System nach Anspruch 8, wobei die Steuerung (100; 300) ein Werbemodul (103; 302) zum Speichern der Werbeinformationen und der gegenstandsspezifischen Informationen umfasst.

10. System nach Anspruch 1, wobei die tragbare Einheit (110; 310) eine Datenschnittstelle (113; 314) zum Speichern von Besucherpräferenzen in Bezug auf einen mit der tragbaren Einheit verbundenen Besucher umfasst.

11. System nach Anspruch 10, wobei das ausgewählte elektronische Etikett (130; 330) angepasst ist, um ein gezieltes Angebot in Bezug auf die Besucherpräferenzen anzuzeigen.

12. Verfahren zum Übertragen von gezielten Informationen an einen Besucher,
umfassend:
Aktivieren eines elektronischen Etiketts (130; 330), das einem Gegenstand zugeordnet ist, um Aufmerksamkeit erregende Zeichen zu erzeugen, wenn sich der Besucher in der Nähe des Gegenstands befindet; und
Anzeigen von Werbeinformationen bezüglich des Gegenstands auf einem Display (112; 312) einer tragbaren Einheit (110; 310), die dem Besucher zugeordnet ist.

13. Verfahren nach Anspruch 12, umfassend:
Auswerten einer aktuellen Position der tragbaren Einheit; und
Auswählen eines Elements in der Nähe der Position der tragbaren Einheit, wobei das aktivierte elektronische Etikett dem ausgewählten Element zugeordnet ist.

14. Verfahren nach Anspruch 13, wobei die Auswertung das Suchen eines Transponders in einer Nähe der tragbaren Einheit umfasst.

15. Verfahren nach Anspruch 14, wobei die Auswertung weiterhin den Vergleich einer ID des Transponders mit einer ID der tragbaren Einheit umfasst.

16. Verfahren nach Anspruch 13, wobei das Aktivieren das Übertragen eines Aktivierungssignals von einer zentralen Steuerung an das elektronische Etikett umfasst.

17. Verfahren nach Anspruch 13, wobei das Anzeigen von Werbeinformationen das Übertragen der Werbeinformationen von einer zentralen Steuereinheit an die tragbare Einheit umfasst.

18. Verfahren nach Anspruch 13, wobei das Anzeigen von Werbeinformationen das Übertragen der Werbeinformationen von einem Verfolgungstransponder in einer Nähe der tragbaren Einheit an die tragbare Einheit umfasst.

19. Verfahren nach Anspruch 12, wobei das Aktivieren Folgendes umfasst:
Übertragen einer ausgewählten ID, die dem elektronischen Etikett zugeordnet ist, von einem Verfolgungstransponder in der Nähe der tragbaren Einheit an die tragbare Einheit.

20. Verfahren nach Anspruch 19, wobei das Aktivieren ferner das Übertragen der ausgewählten ID von der tragbaren Einheit an das elektronische Etikett umfasst.

21. Verfahren nach Anspruch 12, weiterhin umfassend das Anhalten für einen Zeitraum nach dem Anzeigen von Werbeinformationen.

## Revendications

1. Système de messagerie ciblée comprenant :
une pluralité d'étiquettes électroniques (130 ; 330) associées à une pluralité d'éléments ; et
une unité portable (110 ; 310) associée à un visiteur conçue pour afficher des informations publicitaires relatives à au moins un élément sélectionné de ladite pluralité d'éléments, une étiquette sélectionnée parmi ladite pluralité d'étiquettes électroniques (130 ; 330) associée audit élément sélectionné étant conçue pour produire des indices attirant l'attention lorsque ledit visiteur est à proximité dudit élément sélectionné.

2. Système selon la revendication 1, comprenant en outre au moins un transpondeur de surveillance (120 ; 320) pour communiquer avec ladite unité portable (110; 310) lorsque ladite unité portable est à proximité dudit transpondeur.

3. Système selon la revendication 2, comprenant en outre un contrôleur central (100 ; 300) pour commander la transmission desdites informations publicitaires à ladite unité portable (110; 310), et commander l'activation de ladite étiquette électronique sélectionnée (130; 330) pour produire lesdits indices attirant l'attention.

4. Système selon la revendication 2, dans lequel ledit contrôleur central (100; 300) est conçu pour évaluer un emplacement de ladite unité portable (110; 310) et pour commander le fonctionnement dudit transpondeur (120 ; 320).

5. Système selon la revendication 4, dans lequel ledit contrôleur (100) comprend une commande de surveillance (101) pour évaluer la position de ladite unité portable (110) sur la base d'un identifiant d'unité transmis par ladite unité portable et d'un identifiant de transpondeur transmis par ledit transpondeur (120).

6. Système selon la revendication 5, dans lequel ledit contrôleur (100 ; 300) comprend en outre :
un module de publicité (103; 302) pour stocker lesdites informations publicitaires ;
une commande d'unité portable (102) pour commander la transmission desdites informations publicitaires à ladite unité portable (110 ; 310) ; et
une commande d'étiquette (104; 301) pour commander l'activation desdites étiquettes électroniques (130 ; 330).

7. Système selon la revendication 2, comprenant en outre un contrôleur central (100 ; 300) conçu pour transmettre lesdites informations publicitaires audit transpondeur (120 ; 320).

8. Système selon la revendication 7, dans lequel ledit transpondeur (120 ; 320) est conçu pour transmettre à ladite unité portable (110 ; 310) lesdites informations publicitaires et un identifiant d'élément sélectionné associé à ladite étiquette électronique sélectionnée (130 ; 330), et ladite unité portable (110 ; 310) étant conçue pour activer ladite étiquette électronique sélectionnée en fonction dudit identifiant d'élément sélectionné afin de produire lesdits indices attirant l'attention.

9. Système selon la revendication 8, dans lequel ledit contrôleur (100 ; 300) comprend un module de publicité (103 ; 302) pour stocker lesdites informations publicitaires et lesdites informations spécifiques à un élément.

10. Système selon la revendication 1, dans lequel ladite unité portable (110 ; 310) comprend une interface de données (113 ; 314) pour stocker les préférences du visiteur relatives à un visiteur associé à ladite unité portable.

11. Système selon la revendication 10, dans lequel ladite étiquette électronique sélectionnée (130; 330) est conçue pour afficher une offre ciblée relative auxdites préférences du visiteur.

12. Procédé de transmission d'informations ciblées à un visiteur comprenant :
l'activation d'une étiquette électronique (130 ; 330) associée à un élément pour produire des indices attirant l'attention lorsque ledit visiteur est à proximité dudit élément ; et
l'affichage des informations publicitaires relatives audit élément sur un écran (112 ; 312) d'une unité portable (110 ; 310) associée audit visiteur.

13. Procédé selon la revendication 12, comprenant :
l'évaluation d'un emplacement actuel de ladite unité portable ; et
la sélection d'un élément à proximité dudit emplacement de ladite unité portable, l'étiquette électronique activée étant associée audit élément sélectionné.

14. Procédé selon la revendication 13 dans lequel ladite évaluation comprend la recherche d'un transpondeur à proximité de ladite unité portable.

15. Procédé selon la revendication 14, dans lequel ladite évaluation comprend en outre la comparaison d'un identifiant dudit transpondeur avec un identifiant de ladite unité portable.

16. Procédé selon la revendication 13, dans lequel ladite activation comprend la transmission d'un signal d'activation provenant d'un contrôleur central à ladite étiquette électronique.

17. Procédé selon la revendication 13, dans lequel l'affichage des informations publicitaires comprend la transmission desdites informations publicitaires d'un contrôleur central à ladite unité portable.

18. Procédé selon la revendication 13, dans lequel l'affichage des informations publicitaires comprend la transmission desdites informations publicitaires d'un transpondeur de surveillance à proximité de ladite unité portable à ladite unité portable.

19. Procédé selon la revendication 12, dans lequel ladite activation comprend :
la transmission d'un identifiant sélectionné associé à ladite étiquette électronique depuis un transpondeur de surveillance à proximité de ladite unité portable à ladite unité portable.

20. Procédé selon la revendication 19, dans lequel ladite activation comprend en outre la transmission dudit identifiant sélectionné à partir de ladite unité portable à ladite étiquette électronique.

21. Procédé selon la revendication 12, comprenant en outre l'arrêt pendant un certain temps après ledit affichage des informations publicitaires.
